# EUROPÄISCHE PATENTSCHRIFT

(11) **EP 1 651 693 B1**
(45) Veröffentlichungstag und Bekanntmachung des Hinweises auf die Patenterteilung: **20.12.2006**
(21) Anmeldenummer: 04763311.0
(22) Anmeldetag: 17.07.2004
(51) Int. Cl.: C08F 291/06, C08F 251/00, C08F 265/00, C08F 283/06

(54) **WÄSSRIGE DISPERSIONEN VON WASSERLÖSLICHEN POLYMERISATEN VON ETHYLENISCH UNGESÄTTIGTEN ANIONISCHEN MONOMEREN, VERFAHREN ZU IHRER HERSTELLUNG UND IHRE VERWENDUNG**
AQUEOUS DISPERSIONS OF HYDROSOLUBLE POLYMERISATES OF ETHYLENICALLY UNSATURATED ANIONIC MONOMERS, METHOD FOR THE PRODUCTION AND USE THEREOF
DISPERSIONS AQUEUSES DE POLYMERISATS HYDROSOLUBLES DE MONOMERES ANIONIQUES ETHYLENIQUEMENT INSATURES, LEUR PROCEDE DE FABRICATION ET LEUR UTILISATION

(30) Priorität: 25.07.2003 DE 10334262; 21.08.2003 DE 10338828
(43) Veröffentlichungstag der Anmeldung: 03.05.2006
(73) Patentinhaber: BASF Aktiengesellschaft, 67056 Ludwigshafen (DE)
(72) Erfinder: MUKHERJEE, Pulakesh, 68309 Mannheim (DE); LEDUC, Marc, 67346 Speyer (DE); CLAASSEN, Peter, 67063 Ludwigshafen (DE); GAUWEILER, Werner, 67363 Lustadt (DE); NOWACK, Roland, 67134 Birkenheide (DE)
(86) Internationale Anmeldenummer: PCT/EP2004/008011
(87) Internationale Veröffentlichungsnummer: WO 2005/012378

(56) Entgegenhaltungen:
- WO-A-93/21244
- US-A- 4 380 600
- US-A- 5 227 446

## Beschreibung

Die Erfindung betrifft wässrige Dispersionen von wasserlöslichen Polymerisaten von ethylenisch ungesättigten anionischen Monomeren durch radikalische Polymerisation der Monomeren in wässrigem Medium in Gegenwart mindestens eines Stabilisators, ihre Herstellung und ihre Verwendung als Verdickungsmittel für wässrige Systeme.

Aus der US-A-4 380 600 ist ein Verfahren zur Herstellung von wässrigen Dispersionen von wasserlöslichen Polymeren bekannt, wobei man wasserlösliche Monomere, die wasserlösliche Polymere bilden, in einer wässrigen Lösung mindestens eines anderen Polymeren wie Polyethylenglykol, Polyvinylpyrrolidon oder Stärke, in Gegenwart von Radikale bildenden Initiatoren polymerisiert. Die wässrige Lösung des anderen Polymeren, die bei der Polymerisation vorgelegt wird, enthält 3 bis 150 Gewichtsteile des wasserlöslichen Polymeren. Die Menge der bei der Polymerisation eingesetzten wasserlöslichen Monomeren wie Acrylsäure, Natriumacrylat oder Acrylamid, beträgt 10 bis 150 Gewichtsteile, bezogen auf 100 Gewichtsteile Wasser. Um die Stabilität der so erhältlichen wässrigen Dispersionen von wasserlöslichen Polymeren zu erhöhen, kann man die Polymerisation zusätzlich in Gegenwart von oberflächenaktiven Mitteln und bei Bedarf auch noch in Gegenwart von wasserlöslichen anorganischen Salzen wie Natriumchlorid oder Kaliumsulfat durchführen.

Aus der EP-A-0 183 466 ist ein Verfahren zur Herstellung von wässrigen Dispersionen von wasserlöslichen Polymeren bekannt, wobei man die wasserlöslichen Monomeren in einer wässrigen Lösung polymerisiert, die ein Salz z.B. Ammoniumsulfat, und ein polymeres Dispergiermittel enthält, z.B. Polyole, Polyethylenglykol und/oder Polypropylenglykol mit einem Molekulargewicht bis zu 600, kationische oder anionische Polyelektrolyte. Mit Ausnahme von Homopolymerisaten aus speziellen kationischen Monomeren können nach diesem Verfahren keine Homopolymerisate von ionischen Monomeren hergestellt werden, vgl. EP-A-0 183 466, Seite 5, Zeilen 2 bis 6. Wie die Beispiele zeigen, kann man jedoch Copolymerisate aus Acrylamid und Acrylsäure herstellen.

Aus der US-A-5,605,970 ist ein Verfahren zur Herstellung von wässrigen Dispersionen von hochmolekularen anionischen Polymeren bekannt. Bei diesem Verfahren polymerisiert man eine wässrige Lösung von Acrylsäure unter Zusatz von 2 bis 20 Gew.-% Ammoniurrisulfat, Glyzerin, Ethylenglykol und eines niedrigmolekularen Terpolymeren aus 66 Mol-% Acrylsäure, 22 Mol-% Natriumacrylat und 12 Mol-% Ethylhexylacrylat in Gegenwart von 3 bis 14 Mol-% Ethylhexylacrylat und einem Polymerisationsinitiator bei einem pH-Wert unterhalb von 4,5 unter Bildung einer wässrigen Dispersion eines hochmolekularen Terpolymerisates aus Acrylsäure, Natriumacrylat und Ethylhexylacrylat. Das Terpolymerisat wird nach dem Abkühlen isoliert. Bei dem bekannten Verfahren ist es unerlässlich, ein anorganisches Salz und ein hydrophobes Monomer wie Ethylhexylacrylat, einzusetzen. Dadurch werden aber die Eigenschaften der anionischen. Polymerisate in unerwünschter Weise verändert.

Außerdem sind wässrige Dispersionen von wasserlöslichen Polymerisaten von N-Vinylcarbonsäureamiden bekannt. Sie werden gemäß der Lehre der WO-A-03/046024 durch Polymerisieren von N-Vinylcarbonsäureamiden in wässrigem Medium in Gegenwart von polymeren Stabilisatoren wie Polyethylenglykol, Polypropylenglykol, Polyvinylacetat, Polyvinylalkohol, Polyvinylimidazol oder Polydiallyldimethylammoniumchlorid, hergestellt oder durch Polymerisieren von N-Vinylcarbonsäureamiden in wässrigen Lösungen erhalten, die hohe Konzentrationen an anorganischen Salzen aufweisen, vgl. die Beispiele in der EP-B-0 984 990.

Aus der WO-A-97/34933 sind wässrige Dispersionen von hochmolekularen nichtionischen oder anionischen Polymeren bekannt, die durch Polymerisation der Monomeren in einer gesättigten wässrigen Salzlösung unter Zusatz eines anionischen, wasserlöslichen Polymerstabilisators hergestellt werden. Bevorzugt eingesetzte Monomere sind Acrylamid und/oder Acrylsäure. Geeignete Polymerstabilisatoren sind beispielsweise anionisch geladene wasserlösliche Polymere mit einer Molmasse von 100 000 bis 5 Millionen. Sie werden in Mengen von beispielsweise 0,1 bis 5 Gewichtsprozent, bezogen auf die gesamte Dispersion, eingesetzt. Während der Polymerisation muß ein pH-Wert in dem Bereich von 2 bis 5 eingehalten werden.

Wässrige Dispersionen von wasserlöslichen anionischen Polymeren, die anorganische Salze in gelöster Form enthalten, können beispielsweise nicht als Verdickungsmittel für wässrige Systeme wie Papierstreichmassen, verwendet werden, weil die anorganischen Salze die Viskosität des zu verdickenden Systems stark erniedrigen. Diese Eigenschaft ist als "salt poisonig effect" bekannt.

Der Erfindung liegt die Aufgabe zugrunde, wässrige Dispersionen von wasserlöslichen anionischen Polymeren zur Verfügung zu stellen, bei deren Herstellung keine stabilisierend wirkenden anorganischen Salze eingesetzt werden müssen, so dass die entstehenden Dispersionen praktisch frei von solchen Salzen sind.

Die Aufgabe wird erfindungsgemäß gelöst mit wässrigen Dispersionen von wasserlöslichen Polymerisaten von ethylenisch ungesättigten anionischen Monomeren durch radikalische Polymerisation der Monomeren in wässrigem Medium in Gegenwart mindestens eines Stabilisators, wenn man die Polymerisation in Gegenwart mindestens eines wasserlöslichen Polymeren der Gruppen
(a) Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole,
   Copolymerisate aus Alkylpolyalkylenglykolmethacrylaten und Methacrylsäure,
   und mindestens eines wasserlöslichen Polymeren ausgewählt aus
(b) hydrolysierte Copolymerisate aus Vinylalkylothern und Maleinsäureanhydrid in Form der freien Carboxylgruppen und in Form der zumindest partiell mit Alkalimetallhydroxiden oder Ammoniumbasen neutralisierten Salze und/oder einer wasserlöslichen Stärke aus der Gruppe kationisch modifizierter Kartoffelstärke, anionisch modifizierter Kartoffelstärke, abgebauter Kartoffelstärke und Maltodextrin
als Stabilisator durchführt.

Als anionische Monomere kommen beispielsweise monoethylenisch ungesättigte C₃-bis C₅-Carbonsäuren wie Acrylsäure, Methacrylsäure, Ethacrylsäure, Crotonsäure, Maleinsäure oder Fumarsäure, Vinylsulfonsäure, Styrolsulfonsäure, Acrylamidomethylpropansulfonsäure, Vinylphosphonsäure und/oder deren Alkalimetall- oder Ammoniumsalze in Betracht Zu den bevorzugt eingesetzten anionischen Monomeren gehören Acrylsäure, Methacrylsäure, Maleinsäure und Acrylamidornethylpropansulfonsäure. Besonders bevorzugt sind wässrige Dispersionen von Polymerisaten auf Basis von Acrylsäure. Die anionischen Monomeren können entweder allein zu Homopolymerisaten oder auch in Mischung untereinander zu Copolymerisaten polymerisiert werden. Beispiele hierfür sind die Homopolymerisate der Acrylsäure oder Copolymerisate der Acrylsäure mit Methacrylsäure und/oder Maleinsäure.

Die Polymerisation der anionischen Monomeren kann jedoch auch in Gegenwart von anderen ethylenisch ungesättigten Monomeren durchführt. Diese Monomeren können nichtionisch sein oder aber eine kationische Ladung tragen. Beispiele für solche Comonomere sind Acrylamid, Methacrylamid, Acrylsäure ester von einwertigen Alkoholen mit 1 bis 4 C-Atomen, Methacrylsäureester von einwertigen Alkoholen mit 1 bis 2 C-Atomen, Vinylacetat, Vinylpropionat, Dialkylaminoethyl(meth)acrylate, Dialkylaminopropyl(meth)acrylate, Diallyldimethylammoniumchlorid, Vinylimidazol und quaterniertes Vinylimidazol. Basische Monomere wie Dimethylaminoethylacrylat oder Dimethylaminoethylmethacrylat, können sowohl in Form der freien Basen als auch in teilweise oder in vollständig neutralisierter Form bei der Polymerisation eingesetzt werden. Die Comonomeren werden bei der Herstellung der anionischen Polymerisate beispielsweise in solchen Mengen eingesetzt, dass die entstehenden Polymeren wasserlöslich sind sche Ladung aufweisen. Bezogen auf die bei der Polymerisation insgesamt eingesetzten Monomeren beträgt die Menge an nichtionischen und/oder kationischen Comonomeren z.B. 0 bis 99, vorzugsweise 5 bis 75 Gew.-%.

Bevorzugte Copolymere sind beispielsweise Copolymerisate aus 25 bis 90 Gew.% Acrylsäure und 75 bis 10 Gew.-% Acrylamid.

Die Polymerisation kann zusätzlich in Gegenwart mindestens eines Vernetzers durchgeführt werden. Man erhält dann Copolymere mit einer höheren Molmasse als beim Polymerisieren der anionischen Monomeren in Abwesenheit eines Vernetzers. Vernetzte Copolymere haben ein hohes Wasseraufnahmeverrnögen. Sie sind beispielsweise als Verdickungsmittel für wässrige Systeme wie Papierstreichmassen, einsetzbar. Als Vernetzer können alle Verbindungen verwendet werden, die über mindestens zwei ethylenisch ungesättigte Doppelbindungen im Molekül verfügen. Solche Verbindungen werden beispielsweise bei der Herstellung vernetzter Polyacrylsäuren wie superabsorbierenden Polymeren eingesetzt, vgl. EP-A-0 858 478. Beispiele für Vernetzer sind Triallylamin, Pentaerythrittriallether, Methylenbisacrylamid, N,N'-Divinylethylenhamstoff, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der anionischen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomeren.

Bei der Polymerisation verwendet man üblicherweise Initiatoren, die unter den Reaktionsbedingungen Radikale bilden. Geeignete Polymerisationsinitiatoren sind beispielsweise Peroxide, Hydroperoxide, Wasserstoffperoxid, Redoxkatalysatoren und Azoverbindungen wie 2,2-Azobis(N,N- dimethylenisobutyramidine)dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid). Die Initiatoren werden in den bei der Polymerisation üblichen Mengen eingesetzt. Bevorzugt werden Azostarter als Polymerisationsinitiatoren verwendet. Man kann die Polymerisation jedoch auch mit Hilfe emergiereicher Strahlen wie Elektronenstrahlen oder durch Bestrahlen mit UV-Ucht initiieren.

Die wässrigen Dispersionen der anionischen Polymeren haben eine Polymerkonzentration von beispielsweise 1 bis 60, vorzugsweise 10 bis 50, bevorzugt 10 bis 40, besonders bevorzugt 10 bis 30 und insbesondere 15 bis 25 Gew.-%. Sie enthalten erfindungsgemäß mindestens zwei unterschiedliche Gruppen der obengenannten Polymeren (a) und (b) zur Stabilisierung der bei der Polymerisation entstehenden anionischen Polymeren. Die Menge an Stabilisatoren (a) und (b) in der wässrigen Dispersion beträgt beispielsweise 1 bis 30, vorzugsweise 4 bis 30 Gew.-%, bevorzugt 5 bis 25 Gew.-% und insbesondere 5 bis 20 Gew.-%. Die wässrigen Dispersionen haben beispielsweise bei einem pH-Wert von 4,5 Viskositäten in dem Bereich von 200 bis 20 000 mPas, vorzugsweise 200 bis 12 000 mPas, bevorzugt 200 bis 6 000 mPas (gemessen in einem Brookfield-Viskosimeter bei 20°C, Spindel 6, 100 UpM).

Unvernetzte anionische Polymerisate der erfindungsgemäßen wässrigen Dispersionen haben in der Regel Molekulargewichte im Bereich von 10 000 bis 15 000 000 g/mol, bevorzugt 50 000 bis 10 000 000 g/mol, gemessen mit GPC (Gel Permeation Chromatography, gemessen gegen eine Polyacrylsäure-Standard) und FFF (Field Flow Fractionation). Für vemetzte anionische Polymerisate ist das Molekulargewicht auf diese Weise nicht bestimmbar. Das Molekulargwelcht ist dabei abhängig von der eingesetzten Menge des Vemetzers bzw. des Verzweigungsgracles der Polymerisate und kann demzufolge auch außerhalb der genannten Bereiche für unvemetzte Polymerisate liegen.

Als Stabilisator der Gruppe (a) kommen bevorzugt wasserlösliche Pfropfpolymerisate von Vinylacetat auf Polyethylenglykolen, ein- oder beidseitig mit Alkyl-, Carboxyl- oder Aminogruppen endgruppenverschlossene Polyetliyienglykole und/oder Copolymerisate aus Alkylpolyalkylenglykolmethacrylaten und Methacrylsäure in Betracht. Polyalkylenglykole werden beispielsweise in der WO-A-03/046024, Seite 4, Zeile 37 bis Seite 8, Zeile 9, beschrieben. Auf 100 Gewichtsteile der Pfropfgrundlage pfropft man beispielsweise 10 bis 1000, vorzugsweise 30 bis 300 Gewichtsteile Vinylacetat. Bevorzugt setzt man als Pfopfgrundlage Polyethylenglykol mit einem Molekulargewicht M_{N} von 1000 bis 100 000 ein.

Bevorzugt in Betracht kommende Stabilisatoren der Gruppe (a) sind außerdem Copolymerisate aus Alkylpolyalkylenglykolmethacrylaten und Methacrylsäure. Solche Verbindungen sind beispielsweise als Dispergiermittel für Zement bekannt. Sie werden hergestellt, indem man zunächst Addltlonsprodukte von Ethylenoxid und/oder Propylenoxid an beispielsweise C₁- bis C₁₈-Alkohole mit Acrylsäure und/oder Methacrylsäure verestert und diese Ester dann mit Acrylsäure und/oder Methacrylsäure copolymerisiert. Die üblicherweise eingesetzten Copolymerisate enthalten beispielsweise 5 bis 60, vorzugsweise 10 bis 35 Gew.-% einpolymerisierte Einheiten von Alkylpolyalkylenglykol(meth)acrylaten und 95 bis 40, vorzugsweise 90 bis 65 Gew.-% einpolymerisierte Einheiten an (Meth)Acrylsäure. Sie haben meistens Molmassen Mw von 2000 bis 50 000, vorzugsweise 5000 bis 20 000. Diese Copolymerisate können in Form der freien Säuregruppen oder auch In vollständig oder teilweise neutralisierter Form bei der Herstellung der erfindungsgemäßen Dispersionen eingesetzt werden. Die Carboxylgruppen der Copolymerisate werden vorzugsweise mit Natronlauge oder Ammoniak neutralisiert.

Die wasserlöslichen Polymeren der Gruppe (a) werden beispielsweise In Mengen von 2 bis 15, vorzugsweise 5 bis 12 Gew.-%, bezogen auf die gesamte Dispersion, bei der Herstellung der Dispersionen eingesetzt.

Als wasserlösliche Polymere der Gruppe (b) verwendet man vorzugsweise hydrolysierte Copolymerisate aus Vinylalkylethern und Maleinsäureanhydrid in Form der freien Carboxylgruppen und in Form der zumindest partiell mit Alkalimetallhydroxiden oder Ammoniumbasen neutralisierten Salze. Die Alkylgruppe der Vinylalkylether kann beispielsweise 1 bis 4 Kohlenstoffatome aufweisen. Die Copolymerisate sind erhältlich durch Copolymerisieren von Vinylalkylethern mit Maleinsäureanhydrid und anschließende Hydrolyse der Anhydridgruppen zu Carboxylgruppen und gegebenenfalls partielle oder vollständige Neutralisation der Carboxylgruppen. Besonders bevorzugte wasserlösliche Polymere der Gruppe (b) sind hydrolysierte Copolymerisate aus Vinylmethylether und Maleinsäureanhydrid in Form der freien Carboxylgruppen und in Form der zumindest partiell mit Natronlauge, Kalilauge oder Ammoniak neutralisierten Salze.

Weitere geeignete wasserlösliche Polymere der Gruppe (b) sind wasserlösliche Stärken aus der Gruppe kationisch modifizierter Kartoffelstärke, anionisch modifizierter Kartoffelstärke, abgebauter Kartoffelstärke und Maltodextrin. Beispiele für kationisch modifizierte Kartoffelstärken sind die Handelsprodukte Amylofax 15 und Perlbond 970. Eine geeignete anionisch modifizierte Kartoffelstärke ist Perfectamyl A 4692. Hier besteht die Modifizierung im Wesentlichen in einer Carboxylierung von Kartoffelstärke. C*Pur 1906 ist ein Beispiel für eine enzymatisch abgebaute Kartoffelstärke und Maltodextrin C 01915 für eine hydrolytisch abgebaute Kartoffelstärke. Von den genannten Stärken wird vorzugsweise Maltodextrin eingesetzt.

Die erfindungsgemäßen wässrigen Dispersionen enthalten die Polymeren der Gruppe (b) beispielsweise in Mengen von 2 bis 15, vorzugsweise 5 bis 12 Gew.-%. Das Verhältnis der wasserlöslichen Polymeren der Gruppe (a) zu Polymeren der Gruppe (b) beträgt in den erfindungsgemäßen Dispersionen beispielsweise 1 : 5 bis 5 : 1 und liegt vorzugsweise in dem Bereich von 1 : 2 bis 2: 1.

Die wässrigen Dispersionen der anionischen Polymerisate enthalten vorzugsweise als Stabilisator eine Kombination aus
(a) mindestens einem Pfropfpolymerisat von Vinylacetat auf Polyethylenglykolen eines Molekulargewichts M_{N} von 1000 bis 100 000
   und
(b) mindestens ein hydrolysiertes Copolymerisat aus Vinylmethylether und Maleinsäureanhydrid in Form der freien Carboxylgruppen und in Form der zumindest partiell mit Natronlauge, Kalilauge oder Ammoniak neutralisierten Salze.

Bei einer weiteren bevorzugten Ausführungsform der Erfindung verwendet man folgende Kombination aus wasserlöslichen Polymeren:
(a) Copolymerisate aus Alkylpolyalkylenglykolmethacrylaten und Methacrylsäure
   und
(b) mindestens ein hydrolysiertes Copolymerisat aus Vinylmethylether und Maleinsäureanhydrid in Form der freien Carboxylgruppen und in Form der zumindest partiell mit Natronlauge, Kalilauge oder Ammoniak neutralisierten Salze.

Gegenstand der Erfindung ist außerdem auch ein Verfahren zur Herstellung von wässrigen Dispersionen von wasserlöslichen Polymerisaten von ethylenisch ungesättigten anionischen Monomeren durch radikalische Polymerisation der Monomeren in wässrigem Medium in Gegenwart mindestens eines Stabilisators, wobei man die Polymerisation in Gegenwart mindestens eines wasserlöslichen Polymeren der Gruppen
(a) Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole.
   Copolymerisate aus Alkylpolyalkylenglykylmethacrylaten und Methacrylsäure,
   und
(b) hydrolysierte Copolymerisate aus Vinylalkylethern und Maleinsäureanhydrid in Form der freien Carboxylgruppen und in Form der zumindest partiell mit Alkalimetallhydroxiden oder Ammoniumbasen neutralisierten Salze und/oder einer wasserlöslichen Starke aus der Gruppe kationisch modifizierter Kartoffelstärke, anionisch modifizierter Kartoffelstärke, abgebauter Kartoffelstärke und Maltodextrin
als Stabilisator bei pH-Werten in dem Bereich von 1 bis 12, vorzugsweise 2 bis 5 durchführt.

Man erhält stabile wässrige Dispersionen von anionischen Polymerisaten mit einer Teilchengröße von 0,1 bis 200µm, vorzugsweise 0,5 bis 70µm. Bei pH-Werten unterhalb von 6 haben Dispersionen mit einem Gehalt an anionischen Polymeren von etwa 5 bis 35 Gew.-% eine relativ niedrige Viskosität. Verdünnt man sie aber auf einen Gehalt an anionischen Polymeren von 2 Gew.-%, so steigt die Viskosität der Mischung stark an. Bemerkenswert ist, dass sich die Viskosität von beispielsweise 2 gew.-%igen wässrigen Lösungen der erfindungsgemäßen wässrigen Dispersionen in dem pH-Bereich von 7 bis 13 nur geringfügig ändert. So hat z.B. eine 2 gew.-%ige wässrige Lösung aus einer erfindungsgemäß hergestellten wässrigen Polyacrylsäure-Dispersion folgenden Viskositätsverlauf:

| | |
|---|---|
| pH 7: | 25 000 mPas |
| pH 8: | 26 500 mPas |
| pH 9: | 27 000 mPas |
| pH 10: | 27 000 mPas |
| pH 12,3 : | 28 000 mPas |
| pH 13: | 27 500 mPas |

Unvemetzte anionische Polymere lösen sich in Wasser, während die in Gegenwart von Vernetzern hergestellten anionischen Polymeren stark quellen und ebenfalls die Viskosität des wässrigen Medium stark erhöhen. So haben beispielsweise 2 gew.-%ige wässrige Lösungen der anionischen Polymeren bei pH 7 eine Viskosität von 1000 bis 70 000 mPas (gemessen in einem Brookfield-Viskosimeter, Spindel 6, bei 20°C).

Die wässrigen Dispersionen der anionischen Polymeren werden als Verdickungsmittel für wässrige Systeme verwendet, beispielsweise als Zusatz zu Papierstreichmassen, als Verdickungsmittel für Pigmentdruckpasten und als Zusatz zu wässrigen Farben wie Fassadenfarben. Außerdem sind Verwendungen in Pharmaprodukten (Cremes, transdermale Systeme, Salben, Kapseln etc.), in Personal Care Produkten (Handseife, Zahnpasta, Mundpflegeprodukte, Duschgele, Lotionen, Schampoos etc.), in Alkalibatterien sowie Air Care Produkten (beispielsweise Raumlufterfrischer) möglich. Sie werden außerdem in der Kosmetik eingesetzt, z.B. in haarkosmetischen Zubereitungen wie Conditioner oder Haarfestiger oder als Verdicker für Kosmetikformulierungen sowie für die Oberflächenbehandlung von Leder. Weiterhin ist eine Anwendung im Beschichtungsbereich, beispielsweise als Coating von Tabletten möglich.

Die erfindungsgemäßen wässrigen Dispersionen werden beispielsweise als Verdickungsmittel eingesetzt. Mit den aus dem Stand der Technik bekannten Verdickungsmitteln sind einige Probleme verbunden, die mit den erfindungsgemäßen Dispersionen beseitigt werden konnten.

Verdickungsmittel bzw. Rheologiemodifizierungsmittel auf Basis von herkömmlichen Homopolyacrylaten fallen, bedingt durch das verwendete Herstellungsverfahren (in der Regel wird eine Fällungspolymerisation durchgeführt), in Form eines Feststoffes, vorzugsweise als Pulver an. In ihrer Anwendung als Verdickungsmittel besteht daher prinzipiell das Problem, diesen Feststoff wieder in eine Lösung zu überführen. Die Partikel müssen zunächst mit Lösungsmittel, bevorzugt ist Wasser mit einem pH < 7, besonders bevorzugt pH < 4, benetzt werden, um sie dann unter Einwirkung von hohen Scherkräften oder alternativ durch lange Rührzeiten in Lösung zu überführen. In der Regel werden Verdickungsmittel bei der Herstellung von viskosen Flüssigformulierungen zu Anfang des Herstellprozesses im sauren Milieu gelöst und dann anschließend die weiteren Formulierungsbestandteile einformuliert. Eine Einarbeitung von Verdickern auf Basis von Homopolyacrylaten nach dem Stand der Technik in alkalischen Medien ist nicht möglich. Das Medium verdickt sofort, der pulverförmige Verdicker bildet nur sehr schwer lösliche Gelpartikel, die Einstellung einer definierten Viskosität ist so nicht möglich.

Beim Einbringen insbesondere alkalischer Formulierungsinhaltsstoffe in die Lösung des Verdickungsmittels steigt die Viskosität der Formulierung an, gegebenenfalls wird der Formulierung eine Base (beispielsweise NaOH, KOH, Triethanolamin, organische oder anorganische Amine, etc.) zugegeben, um die Verdickungswirkung des Polyacrylates zu entfalten.

Man versucht in der Regel, alkalische Komponenten möglichst als letztes in die Formulierung einzubringen, um im Prozess möglicht lange ein niederviskoses Produkt handhaben zu können. Alternativ kann die Viskosität auch durch Zugabe einer konzentrierten Lösung eines zuvor separat gelösten Verdickungsmittels eingestellt werden, wobei hier aufgrund der Lösungseigenschaften des Verdickungsmittels sowie der Viskosität dieser Verdickervormischung Grenzen gesetzt sind. Von Nachteil ist hierbei außerdem, dass zusätzliche Anlagenteile (z.B. Vorrats-/Dosier-tank) notwendig sind. Eine generelles Problem ist, dass die Endviskosität der Formulierung variieren kann.

Durch die Verwendung der erfindungsgemäßen wässrigen Polymerdispersionen als Verdickungsmittel bei der Herstellung von viskosen Flüssigformulierungen wird eine bisher nicht gegebene Prozessfreiheit erreicht. Die Polymerdispersionen können im gesamten pH-Wertbereich zugesetzt werden, d.h. unabhängig von dem pH-Wert der Formulierung zum Zeitpunkt der Zugabe (siehe anwendungstechnische Beispiele 17-20 als Verdickungsmittel), wobei die Endviskosität bei Einsatz gleicher Inhaltsstoffe konstant ist. Die Verwendung unterschiedlicher Basen führt dabei bekanntermaßen zu unterschiedlichen Viskositäten.

Die erfindungsgemäßen wässrigen Dispersionen können einem zu verdickenden System im gesamten pH-Wertbereich zugesetzt werden.

Eine erfindungsgemäße wässrige Polyacrylatdispersion kann gleichermaßen in ein saures wie alkalisches Medium vorteilhafterweise unter Einwirkung nur geringer Scherkräfte gelöst werden.

Besonders vorteilhaft ist die Möglichkeit, die erfindungsgemäße Polymerdispersion in eine alkalische Formulierung einarbeiten zu können. Verdickungsmittel auf Basis von Homopolyacrylaten nach dem Stand der Technik können insbesondere in letzterem Fall nur unter Einwirkung von sehr hohen Scherkräften und/oder langen Prozesszeiten (Rührdauer) sehr eingeschränkt verwendet werden. Aufgrund der guten Löslichkeit der erfindungsgemäßen Polymerdispersionen brauchen nur geringe Scherkräfte angewandt zu werden, d.h. es können Rührwerke wie Ankerrührer, Flügelrührer o.ä. eingesetzt werden. Aufwendige und teure Apparaturen mit hohen Scherkräften (z.B. Rotor-Stator-Mischsysteme) sind daher nicht notwendig. Hierdurch bedingt ist der Energieeintrag in die Formulierung deutlich reduziert. Ein mechanischer Abbau der Polymerketten und damit eine partielle Reduzierung der Viskosität wird dadurch vermieden.

Des weiteren ermöglicht die Verwendung der erfindungsgemäßen Polymerdispersionen bei der Herstellung einer Formulierung im letzten Prozessschritt die exakte Einstellung der Produktviskosität. Dies hat weiterhin den Vorteil, dass bis zu diesem Schritt die Viskosität niedrig ist und keine hohen Scherkräfte auf die Formulierung einwirken. Damit ist zusätzlich die Einarbeitung von festen, auch mechanisch instabilen Formulierungsbestandteilen begünstigt.

Da ein mit erfindungsgemäßen wässrigen Dispersionen hergestelltes Verdickungsmittel problemlos auch in eine alkalisches Produkt eingearbeitet werden kann, ist auch eine nachträgliche Korrektur der Produktviskosität möglich.

Die erfindungsgemäßen Polymerdispersionen haben des weiteren die vorteilhaften Eigenschaften, dass sie aufgrund ihrer niedrigen Viskosität hervorragend handhabbar und dosierbar sind und dass sie sich in dem zu verdickenden Medium sehr rasch lösen, wodurch Prozesszeiten reduziert werden können.

Prinzipiell eignen sich die erfindungsgemäßen wässrigen Dispersionen für alle Arten von Produkten, bei denen die Einstellung eine definierten Rheologie von Bedeutung ist. Ohne sich auf die folgenden Anwendungen beschränken zu wollen, seien beispielhaft genannt: Wasch- und Reinigungsmittel, Styling-Gele, Shampoos, Haarfärbemittel und Farben.

Eine weitere spezielle Anwendungsform der erfindungsgemäßen wässrigen Dispersionen der anionischen Poylmeren liegt in der Herstellung von bedruckten flexiblen Substraten und insbesondere bedrucktem Textil, im Folgenden auch Textildruckverfahren genannt.

Zur Durchführung des Textildruckverfahrens kann man beispielsweise so vorgehen, dass man mindestens eine erfindungsgemäße wässrige Dispersion zu einer Pigmentdruckpaste, im Folgenden auch erfindungsgemäße Pigmentdruckpaste genannt, verarbeitet und danach nach an sich bekannten Methoden textile Substrate bedruckt.

Vorteilhaft stellt man erfindungsgemäße Pigmentdruckpasten unter durch Mischen von mindestens einer erfindungsgemäßen wässrigen Dispersion mit im Druckprozess gängigen Hilfsmitteln und mindestens einem Pigment her. Die Farbtiefe stellt man vorteilhaft durch Abstimmen des Verhältnisses Pigment zu erfindungsgemäß eingesetzter wässriger Dispersion ein.

Pigment fügt man der erfindungsgemäßen Pigmentdruckpaste vorzugsweise in Form von Pigmentzubereitungen zu. Pigmentzubereitungen enthalten üblicherweise 20 bis 60 Gew.-% Pigment, weiterhin Wasser und eine oder mehrere oberflächenaktive Verbindungen, beispielsweise einen oder mehrere Emulgatoren, beispielhaft seien mehrfach alkoxylierte C10-C30-Alkanole genannt.

Unter Pigmenten sind im Rahmen der vorliegenden Erfindung praktisch nicht lösliche, dispergierte feinteilige, organische oder anorganische Farbmittel gemäß der Definition in DIN 55944 zu verstehen. Bevorzugt wählt man mindestens ein organisches Pigment und/oder Metallpigment aus.

Beispielhaft ausgewählte organische Pigmente sind
- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinohpigmente: C.I. Pigment Orange 61; C.I. Pigment Red 257 und 260; C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
- C.I. Pigment Yellow 101 (Aldazingelb);
- C.I. Pigment Brown 22.

Beispiele für besonders bevorzugte Pigmente sind: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Weitere geeignete Pigmente sind metallische Pigmente wie beispielsweise Goldbronze, Silberbronze, Iriodinpigmente, Glitter.

Der mittlere Durchmesser von erfindungsgemäß eingesetztem Pigment liegt üblicherweise im Bereich von 20 nm bis 1,5 µm, bevorzugt im Bereich von 300 bis 500 nm.

Als Bindemittel kann man alle im Textildruck üblichen Bindemittel einsetzen, beispielsweise Bindemittel auf Basis von Polyurethanen und bevorzugt Bindemittel auf Acrylatbasis (Acrylatbinder). Bindemittel auf Acrylatbasis sind üblicherweise Copolymerisate von (Meth)acrylsäure einem oder mehreren mit (Meth)acrylsäure-C1-C10-Alkylester und gegebenenfalls weiteren Comonomeren wie beispielsweise (Meth)acrylnitril und Styrol, wobei die (Meth)acrylsäure mit beispielsweise Alkalimetallhydroxid oder Ammoniak partiell oder vollständig neutralisiert sein kann.

In einer Ausführungsform der vorliegenden Erfindung haben Bindemittel, insbesondere Bindemittel auf Acrylatbasis eine Glastemperatur Tg von mindestens 0°C, ermittelt beispielsweise nach der Fox-Gleichung oder bestimmt nach DSC (Differentialthermoanalyse, Differential Scanning Calorimetry).

Das Verhältnis Pigment zu Bindemittel kann man in weiten Grenzen wählen. So ist es beispielsweise möglich, Pigment und Bindemittel in einem Gewichtsverhältnis von 20 : 1 bis 1 : 100 zu wählen. In einer bevorzugten Ausführungsform der vorliegenden Erfindung stellt man das Verhältnis Pigment zu erfindungsgemäß eingesetzter wässriger Dispersion so ein, dass das Gewichtsverhältnis von Pigment zu Feststoffanteile von erfindungsgemäß eingesetzter wässriger Dispersion im Bereich von 1 : 1 bis 1 : 20 liegt.

Natürlich ist es auch möglich, zunächst Pigment und Bindemittel in einem Gewichtsverhältnis im Bereich von 20 : 1 bis 10:1 vorzumischen und erst unmittelbar vor dem Druck weiteres Bindemittel zuzumischen.

Weitere gängige Hilfsmittel für Pigmentdruckpasten im Textildruck sind aus Ullmann, Handbuch der technischen Chemie und Verfahrenstechnik bekannt, vergleiche beispielsweise Ullmann's Enyclopedia of Industrial Chemistry, 5. Auflage, Stichwort: Textile Auxiliaries, Bd. A26, S. 286 ff. und 296 ff., Verlag Chemie, Weinheim, Deerfield/Florida, Basel; 1996, und aus dem Textil-Hilfsmittel-Katalog, Konradin Verlag Robert Kohlhammer GmbH, D-70771 Leinfelden-Echterdingen. Als gängige Hilfsmittel seien Verdicker, Fixierer, Griffverbesserer, Entschäumer, Rheologieverbesserer, Säurespender und Emulgatoren beispielhaft genannt:

In einer bevorzugten Ausführungsform der vorliegenden Erfindung enthalten erfindungsgemäße Pigmentdruckpasten weiterhin Griffverbesserer, ausgewählt aus Silikonen, insbesondere Polydimethylsiloxanen, und Fettsäure-C1-C10-Alkylestern. Beispiele für kommerziell erhältliche Griffverbesserer, die den erfindungsgemäßen Pigmentdruckpasten zugesetzt werden können, sind Acramin® Weichmacher SI (Bayer AG), Luprimol SIG®, Luprimol TX 4732 und Luprimol CW® (BASF Aktiengesellschaft).

In einer bevorzugten Ausführungsform der vorliegenden Erfindung enthalten erfindungsgemäßen Pigmentdruckpasten als weitere Zusätze einen oder mehrere Emulgatoren. Beispiele für geeignete Emulgatoren sind aryl- oder alkylsubstituierte Polyglykolether. Kommerziell erhältliche Beispiele für geeignete Emulgatoren sind Emulgator W® (Bayer), Luprintol PE New® und Luprintol MP® (BASF Aktiengesellschaft).

Zur Herstellung von erfindungsgemäßen Pigmentdruckpasten kann man beispielsweise so vorgehen, dass man Wasser, gegebenenfalls einen Entschäumer, beispielsweise einen Entschäumer auf Silikonbasis verrührt und unter Mischen, beispielsweise unter Rühren, mindestens ein Bindemittel zufügt. Danach kann man einen oder mehrere Emulgatoren und das oder die Pigmente zugeben.

Als nächstes kann man einen oder mehrere Griffverbesserer zugeben, beispielsweise eine oder mehrere Silikonemulsionen.

Anschließend gibt man mindestens eine erfindungsgemäße wässrige Dispersion hinzu und homogenisiert unter weiterem Vermischen, beispielsweise Rühren.

Eine typische erfindungsgemäße Pigmentdruckpaste enthält, jeweils pro Kilogramm erfindungsgemäßer Pigmentdruckpaste
5 bis 400 g, bevorzugt 10 bis 250 g Bindemittel, beispielsweise Acrylatbindemittel,
0 bis 100 g, bevorzugt 1 bis 5 g Emulgator,
1 bis 500 g, bevorzugt 3 bis 100 g der erfindungsgemäen wässrigen Dispersionen
0 bis 500 g, bevorzugt 0,1 bis 250 g, bevorzugt 0,5 bis 120 g Pigment,
gegebenenfalls weitere Hilfsmittel;
der Rest ist bevorzugt Wasser.

In einer Ausführungsform der vorliegenden Erfindung haben erfindungsgemäße Pigmentdruckpasten bei 20°C eine Viskosität im Bereich von 0,3 bis 4000 dPa·s, bevorzugt 20 bis 200 dPa·s und besonders bevorzugt 60 bis 100 dPa·s. Viskositäten lassen sich nach gängigen Methoden bestimmen, insbesondere beispielsweise mit einem Rotationsviskosimeter, beispielsweise dem Viscotester VT02 oder VT24 der Fa. Haake Mess-Technik GmbH u. Co., Karlsruhe.

Pigmentdruck unter Verwendung mindestens einer erfindungsgemäßen Pigmentdruckpaste kann man nach verschiedenen Verfahren durchführen, die an sich bekannt sind. In der Regel verwendet man eine Schablone, durch die man die erfindungsgemäße Pigmentdruckpaste mit einer Rakel presst. Dieses Verfahren gehört zu den Siebdruckverfahren. Pigmentdruckverfahren unter Verwendung mindestens einer erfindungsgemäßen Pigmentdruckpaste liefern bedruckte Substrate mit ausgezeichnetem Griff der bedruckten Substrate. Gegenstand der vorliegenden Erfindung sind daher flexible Substrate und insbesondere Textilien, bedruckt nach dem Druckverfahren unter Verwendung mindestens einer erfindungsgemäßen Pigmentdruckpaste.

Zur Durchführung des Pigmentdruckverfahrens geht man bevorzugt so vor, dass man Textil mit mindestens einer erfindungsgemäßen Pigmentdruckpaste kontaktiert und im Anschluss daran trocknet.

Besonders bevorzugt geht man so vor, dass man vor der eigentlichen Trocknung erfindungsgemäß behandeltes Substrat vortrocknet, beispielsweise auf eine Restfeuchte im Bereich von 0,5 bis 2 Gew.-%.

Die Vortrocknung bzw. Trocknung lässt sich auf gängigen Apparaturen durchführen. So ist sie beispielsweise, wenn man textile Substrate zu behandeln wünscht, auf allen in der Textilindustrie üblichen Fixier- und Trocknungsaggregaten durchführbar. Geeignete Trocknungs- bzw. Vortrocknungstemperaturen sind beispielsweise 50 bis 300°C, bevorzugt 70 bis 180°C.

Danach kann man über einen Zeitraum von beispielsweise 10 Sekunden bis 60 Minuten, bevorzugt 0,5 Minuten bis 7 Minuten bei Temperaturen im Bereich von 50 bis 300°C, bevorzugt 100 bis 160°C, besonders bevorzugt 110 bis 130°C thermisch behandeln. Polyamid, Polyester, Polyvinylchlorid, modifizierte Polyester, Polyestermischgewebe, Polyamidmischgewebe, Polyacrylnitril, Polycarbonat behandelt man thermisch vorteilhaft bei Temperaturen im Bereich von 130 bis 250°C. Polypropylengewebe bevorzugt zwischen 80 und 130°C, bevorzugt 110 und 130°C. Dabei ist unter der Temperatur im Allgemeinen die Temperatur des Mediums zu verstehen, welches das zu behandelnde flexible Substrat umgibt.

Die K-Werte der Polymerisate wurden nach H. Fikentscher, Cellulose-Chemie, Band 13, 58 - 64 und 71 - 74 (1932) in 5%iger wässriger Kochsalzlösung bei 25°C, einer Konzentration von 0,1 Gew.-% und einem pH-Wert von 7 bestimmt.

Die Viskosität der Dispersionen wurde jeweils in einem BroaKield-Viskosimeter mit einer Spindel Nr. 4 bei 20 UpM und einer Temperatur von 20°C gemessen. Falls nicht anders angegeben, bedeuten die Angaben in % Gewichtsprozent.

### Beispiele

Die In den Beispielen erfindungsgemäß verwendeten wasserlöslichen Polymeren hatten folgende Zusammensetzung:
- Stabilisator 1:: Pfropfpolymerisat von Vinylacetat auf Polyethylenglykol des Molekulargewichts M_{N} 6000, Polymerkonzentration 20%
- Stabilisator 2:: Hydrolysiertes Copolymerisat aus Vinylmethylether und Maleinsäure in Form der freien Carboxylgruppen, Polymerkonzentration 35%
- Stabilisator 3:: Copolymerisat aus Methylpolyethylenglykolmethacrylat und Methacrylsäure der Molmasse M_{w} 1500, Polymerkonzentration 40%
- Stabilisator 8:: Maltodextrin (C-PUR01910, 100%ig)

In den Beispielen wurden folgende Polymerlsatlonsinitiatoren verwendet:
Azostarter VA-044: 2.2'-Azobis(N,N'-dimethylenisobutyramidine)dihydrochlorid
Azostarter V-70: 2,2'-Azobis(4-methoxy-2,4-dimethylvaleronitril)
Azostarter V-65: 2,2'-Azobis(2,4-dimethylvaleronitril)

### Beispiel 1

In einem 250 ml fassenden Vierhalskolben, der mit einem Teflonrührer und einer Vorrichtung für das Arbeiten unter Stickstoff ausgerüstet war, wurden unter Durchleiten von Stickstoff
90,0 g Stabilisator 1,
51,4 g Stabilisator 2 und
28,6 g vollständig entsalztes Wasser
vorgelegt und mit einer Drehzahl von 300 UpM gerührt. Zu dieser Lösung tropfte man innerhalb von 5 bis 10 Minuten 30 g Acrylsäure, erwärmte die Mischung auf 50°C, fügte 0,03 g 2,2'-Azobis(N,N'-dirriethylenisobutyramidine)dihydrochlorid (Azostarter VA-044) zu und polymerisierte die Mischung 5 Stunden bei 50°C. Das Reaktionsgemisch wurde danach mit 0,05 g Azostarter VA-044 versetzt und 1 Stunde bei 60°C nachpolymerisiert. Man erhielt eine wässrige Dispersion mit einem Feststoffgehalt von 33 %. Sie hatte einen pH-Wert von 4 und eine Viskosität von 5950 mPas. Das Polymerisat hatte einen K-Wert von 120,7. Durch Zugabe von Wasser zu der Dispersion wurde eine 2%ige wässrige Lösung hergestellt, die bei einem pH-Wert von 7 eine Viskosität von 2640 mPas hatte.

Die Teilchengrößenverteilung der dispergierten Teilchen der Polymerdispersion betrug 3 bis 8 µm.

### Beispiel 2

In der im Beispiel 1 angegebenen Vorrichtung wurden
90,0 g Stabilisator 1,
51,4 g Stabilisator 2 und
28,6 g vollständig entsalztes Wasser
vorgelegt und unter Durchleiten von Stickstoff mit einer Drehzahl von 300 UpM gerührt. Zu dieser Lösung tropfte man innerhalb von 5 bis 10 Minuten eine Mischung aus 30 g Acrylsäure und 0,09 g Triallylamin als Vernetzer und erwärmte die Mischung innerhalb von 5 bis 10 Minuten auf eine Temperatur von 40°C. Man gab dann 0,03 g 2,2'-Azobis(4-methoxy-2,4-dimethylvaleronitril) (Azostarter V-70) zu und polymerisierte die Mischung 5 Stunden bei einer Temperatur von 40°C. Dann gab man zur Nachpolymerisation 0,05 g Azostarter V-70 zu und erhitzte die Dispersion eine Stunde auf eine Temperatur von 50°C. Man erhielt eine wässrige Dispersion mit einer Viskosität von 2700 mPas. Sie hatte einen pH-Wert von 4. Durch Zugabe von Wasser zu der wäßrigen Dispersion wurde eine 2%ige wässrige Lösung hergestellt. Sie hatte bei pH 7 eine Viskosität von 39000 mPas.

Die Teilchengrößenverteilung der dispergierten Teilchen der Polymerdispersion betrug 5 bis 60 µm.

### Beispiel 5

Beispiel 1 wurde mit den Ausnahmen wiederholt, dass man in der Polymerisationsapparatur eine Mischung aus
45,0 g Stabilisator 3
51,4 g Stabilisator 2 und
73,6 g vollständig entsalztes Wasser
vorlegte. Man erhielt eine wässrige Emulsion mit einer Vikosität von 3650 mPas.
Die Teilchengrößenverteilung der dispergierten Teilchen der Polymerdispersion betrug 3 bis 10µm.

### Beispiel 6

In der im Beispiel 1 angegebenen Vorrichtung wurden
90,0 g Stabilisator 1,
51,4 g Stabilisator 2 und
28,6 g vollständig entsalztes Wasser
vorgelegt und unter Durchleiten von Stickstoff mit einer Drehzahl von 300 UpM gerührt. Zu dieser Lösung tropfte man innerhalb von 5 bis 10 Minuten eine Mischung aus 30 g Acrylsäure und 0,22 g Pentaerythrittriallylether (70%ig) als Vernetzer und erwärmte die Mischung innerhalb von 5 bis 10 Minuten auf eine Temperatur von 40°C. Man gab dann 0,03 g Azostarter V-70 zu und polymerisierte die Mischung 5 Stunden bei einer Temperatur von 40°C. Dann gab man zur Nachpolymerisation 0,05 g Azostarter VA-044 zu und erhitzte die Dispersion eine Stunde auf eine Temperatur von 50°C. Man erhielt eine wässrige Dispersion mit einer Viskosität von 2900 mPas. Durch Zugabe von Wasser und Einstellen des pH-Wertes auf 7 wurde eine 2%ige wässrige Lösung hergestellt, die eine Viskosität von 10 000 mPas hatte. Die Teilchengrößenverteilung der dispergierten Teilchen der Polymerdispersion betrug 5 bis 70 µm.

### Beispiel 7

In einem 250 ml fassenden Vierhalskolben, der mit einem Teflonrührer und einer Vorrichtung für das Arbeiten unter Stickstoff ausgerüstet war, wurden unter Durchleiten von Stickstoff
90,0 g Stabilisator 1,
18,0 g Stabilisator 8 und
62,0 g vollständig entsalztes Wasser
vorgelegt und mit einer Drehzahl von 200 UpM gerührt. Zu dieser Lösung tropfte man innerhalb von 5 bis 10 Minuten 30 g Acrylsäure, erwärmte die Mischung auf 50°C, fügte 0,03 g Azostarter VA-044 zu und polymerisierte die Mischung 5 Stunden bei 50°C. Das Reaktionsgemisch wurde danach mit 0,05 g Azostarter VA-044 versetzt und 1 Stunde bei 60°C nachpolymerisiert. Man erhielt eine wässrige Dispersion mit einem Feststoffgehalt von 33 %. Sie hatte einen pH-Wert von 2 und eine Viskosität von 10500 mPas. Eine daraus durch Zugabe von Wasser hergestellte 2%ige Lösung hatte bei einem pH-Wert von 7 eine Viskosität von 2000 mPas. Die Teilchengrößenverteilung der dispergierten Teilchen der Polymerdispersion betrug 5 bis 40 µm.

### Beispiel 8

In der im Beispiel 1 angegebenen Vorrichtung wurden
90,0 g Stabilisator 1,
51,4 g Stabilisator 2 und
28,6 g vollständig entsalztes Wasser
vorgelegt und unter Durchleiten von Stickstoff mit einer Drehzahl von 300 UpM gerührt. Zu dieser Lösung tropfte man innerhalb von 5 bis 10 Minuten eine Mischung aus 30 g Acrylsäure und 0,09 g Triallylamin als Vernetzer und erwärmte die Emulsion innerhalb von 5 bis 10 Minuten auf eine Temperatur von 50°C. Man gab dann 0,03 g Azostarter V-65 zu und polymerisierte die Mischung 5 Stunden bei einer Temperatur von 50°C. Dann gab man zur Nachpolymerisation 0,05 g Azostarter VA-044 zu und erhitzte die Dispersion eine Stunde auf eine Temperatur von 60°C. Man erhielt eine wässrige Dispersion mit einer Viskosität von 3700 mPas. Sie hatte einen pH-Wert von 4. Durch Zugabe von Wasser zu der wäßrigen Dispersion wurde eine 2%ige wässrige Lösung hergestellt. Sie hatte bei pH 7 eine Viskosität von 29000 mPas. Die Teilchengrößenverteilung der dispergierten Teilchen der Polymerdispersion betrug 5 bis 30 µm.

### Beispiel 9

In der im Beispiel 1 angegebenen Vorrichtung wurden
90,0 g Stabilisator 1,
45,7 g Stabilisator 2 und
34,3 g vollständig entsalztes Wasser
vorgelegt und unter Durchleiten von Stickstoff mit einer Drehzahl von 300 UpM gerührt. Zu dieser Lösung tropfte man innerhalb von 5 bis 10 Minuten eine Mischung aus 30 g Acrylsäure und 0,09 g Triallylamin als Vernetzer und erwärmte die Mischung innerhalb von 5 bis 10 Minuten auf eine Temperatur von 40°C. Man gab dann 0,03 g Azostarter V-70 zu und polymerisierte die Mischung 5 Stunden bei einer Temperatur von 40°C. Zur Nachpolymerisation setzte man 0,05 g Azostarter VA-044 zu und erhitzte die Dispersion eine Stunde auf eine Temperatur von 50°C. Man erhielt eine wässrige Dispersion mit einer Viskosität von 2300 mPas. Durch Zugabe von Wasser und Einstellen des pH-Wertes auf 7 wurde eine 2%ige wässrige Lösung hergestellt, die eine Viskosität von 32 000 mPas hatte.

### Beispiel 12

In einem 21 fassenden Vierhalskoben, der mit einem Rührer und einer Vorrichtung für das Arbeiten unter Stickstoff ausgerüstet war, wurden unter Durchleiten von Stickstoff 257,0 g Stabilisator 1,
449,0 g Stabilisator 2 und
102,5 g vollständig entsalztes Wasser
vorgelegt und mit einer Drehzahl von 200 UpM 10 Minuten lang gerührt. Zu dieser Lösung tropfte man innerhalb von 10 Minuten 60 g Acrylsäure, erwärmte die Reaktionsmischung auf 60°C, fügte innerhalb von 3,5 Stunden eine Lösung aus 90 g Acrylsäure und 1,5 g ethoxyliertes Trimethylenpropantriacrylat und zeitgleich startend eine Lösung von 0,15 g Azostarter VA-044 in 40 g Wasser zu, wobei letztere Lösung innerhalb von 4 Stunden zugegeben wurde. Nach Zulaufende wurde eine weitere halbe Stunde bei 60°C gerührt. Anschliessend wurde durch Zugabe von 0,225 g Azostarter VA-044 eine Stunde bei 60°C nachpolymerisiert. Nach Abkühlen auf Raumtemperatur erhielt man eine wässrige Dispersion mit einem Polymergehalt von 15 Gew.%, einer Viskosität von 5350 mPas und mit einem pH-Wert von 4,5. Durch Zugabe von Wasser und Natronlauge wurde eine 2%ige Dispersion mit einem pH-Wert von 7 hergestellt. Die Viskosität der Dispersion betrug 10900 mPas.

### Beispiel 13

In der im Beispiel 12 angegebenen Vorrichtung wurden
257,0 g Stabilisator 1,
449,0 g Stabilisator 2 und
102,5 g vollständig entsalztes Wasser
vorgelegt und mit einer Drehzahl von 200 UpM 10 Minuten lang gerührt. Zu dieser Lösung tropfte man innerhalb von 10 Minuten 60 g Acrylsäure und 0,015 g Azostarter VA-044, erwärmte die Reaktionsmischung auf 60°C, fügte innerhalb von 3,5 Stunden eine Lösung aus 90 g Acrylsäure und 1,5 g ethoxyliertes Trimethylenpropantriacrylat und zeitgleich startend eine Lösung von 0,135 g Azostarter VA-044 in 40 g Wasser zu, wobei letztere Lösung innerhalb von 4 Stunden zugegeben wurde. Nach Zulaufende wurde eine weitere halbe Stunde bei 60°C gerührt. Anschliessend wurde durch Zugabe von 0,225 g Azostarter VA-044 eine Stunde bei 60°C nachpolymerisiert. Nach Abkühlen auf Raumtemperatur erhielt man eine wässrige Dispersion mit einem Polymergehalt von 15 Gew.-%, einer Viskosität von 5550 mPas und mit einem pH-Wert von 4,5. Durch Zugabe von Wasser und Natronlauge wurde eine 2%ige Dispersion mit einem pH-Wert von 7 hergestellt. Die Viskosität der Dispersion betrug 10300 mPas.

### Beispiel 14

In der im Beispiel 12 angegebenen Vorrichtung wurden
257,0 g Stabilisator 1,
449,0 g Stabilisator 2 und
102,5 g vollständig entsalztes Wasser
vorgelegt und mit einer Drehzahl von 200 UpM 10 Minuten lang gerührt. Zu dieser Lösung tropfte man innerhalb von 10 Minuten 60 g Acrylsäure und 0,015 g Azostarter VA-044, erwärmte die Reaktionsmischung auf 60°C, fügte innerhalb von 3,5 Stunden eine Lösung aus 90 g Acrylsäure und 1,5 g Triallylamin und zeitgleich startend eine Lösung von 0,135 g Azostarter VA-044 in 40 g Wasser zu, wobei letztere Lösung innerhalb von 4 Stunden zugegeben wurde. Nach Zulaufende wurde eine weitere halbe Stunde bei 60°C gerührt. Anschliessend wurde durch Zugabe von 0,225 g Azostarter VA-044 eine Stunde bei 60°C nachpolymerisiert. Nach Abkühlen auf Raumtemperatur erhielt man eine wässrige Dispersion mit einem Polymergehalt von 15 Gew.-%, einer Viskosität von 10250 mPas und mit einem pH-Wert von 4,5. Durch Zugabe von Wasser und Natronlauge wurde eine 2%ige Dispersion mit einem pH-Wert von 7 hergestellt. Die Viskosität der Dispersion betrug 28500 mPas.

### Beispiel 15

In der im Beispiel 12 angegebenen Vorrichtung wurden
257,0 g Stabilisator 1,
449,0 g Stabilisator 2 und
102,5 g vollständig entsalztes Wasser
vorgelegt und mit einer Drehzahl von 200 UpM 10 Minuten lang gerührt. Zu dieser Lösung tropfte man innerhalb von 10 Minuten 60 g Acrylsäure und 0,015 g Azostarter VA-044, erwärmte die Reaktionsmischung auf 60°C, fügte innerhalb von 3,5 Stunden eine Lösung aus 75 g Acrylsäure, 15 g Methylmethacrylat und 1,5 g Triallylamin und zeitgleich startend eine Lösung von 0,135 g Azostarter VA-044 in 40 g Wasser zu, wobei letztere Lösung innerhalb von 4 Stunden zugegeben wurde. Nach Zulaufende wurde eine weitere halbe Stunde bei 60°C gerührt. Anschliessend wurde durch Zugabe von 0,225 g Azostarter VA-044 eine Stunde bei 60°C nachpolymerisiert. Nach Abkühlen auf Raumtemperatur erhielt man eine wässrige Dispersion mit einem Polymergehalt von 15 Gew.%, einer Viskosität von 5800 mPas und mit einem pH-Wert von 4,5. Durch Zugabe von Wasser und Natronlauge wurde eine 2%ige Dispersion mit einem pH-Wert von 7 hergestellt. Die Viskosität der Dispersion betrug 17500 mPas.

### Beispiel 16

In der im Beispiel 12 angegebenen Vorrichtung wurden
257,0 g Stabilisator 1,
449,0 g Stabilisator 2 und
102,5 g vollständig entsalztes Wasser
vorgelegt und mit einer Drehzahl von 200 UpM 10 Minuten lang gerührt. Zu dieser Lösung tropfte man innerhalb von 10 Minuten 60 g Acrylsäure und 0,015 g Azostarter VA-044, erwärmte die Reaktionsmischung auf 60°C, fügte innerhalb von 3,5 Stunden eine Lösung aus 82,5 g Acrylsäure, 7,5 g Methylacrylat und 1,5 g Triallylamin und zeitgleich startend eine Lösung von 0,135 g Azostarter VA-044 in 40 g Wasser zu, wobei letztere Lösung innerhalb von 4 Stunden zugegeben wurde. Nach Zulaufende wurde eine weitere halbe Stunde bei 60°C gerührt. Anschliessend wurde durch Zugabe von 0,225 g Azostarter VA-044 eine Stunde bei 60°C nachpolymerisiert. Nach Abkühlen auf Raumtemperatur erhielt man eine wässrige Dispersion mit einem Polymergehalt von 15 Gew.-%, einer Viskosität von 21900 mPas und mit einem pH-Wert von 4,5. Durch Zugabe von Wasser und Natronlauge wurde eine 2%ige Dispersion mit einem pH-Wert von 7 hergestellt. Die Viskosität der Dispersion betrug 23650 mPas.

### Anwendungstechnische Beispiele als Verdickungsmittel

### Beispiele 17 - 20

In je einem Becherglas wurde vollentionisiertes Wasser vorgelegt, dann in unterschiedlicher Reihenfolge die wässrige Dispersion gemäß Beispiel 12 (Wirkstoffgehalt 15 %) als Verdicker und Base zugegeben. Die genaue Reihenfolge ist in der Tabelle 1 dargestellt. Der pH Wert der Rezepturen betrug 10. Anschließend wurde mit einem Brookfield Viskosimeter DV-II (100 rpm, 20°C) die Viskosität der Formulierung bestimmt.

**Tabelle 1**

| Beispiel | Formulierung - Zusammensetzung in der Reihenfolge der Zugabe | Viskosität [mPas] |
|---|---|---|
| 17 | 96,4 % Wasser | |
| | 3,3 % Dispersion gemäß Beispiel 12 | 684 |
| | 0,3 % NaOH (100 %) | (Spindel 3) |
| 18 | 96,4 % Wasser | |
| | 0,3 % NaOH (100 %) | 676 |
| | 3,3 % Dispersion gemäß Beispiel 12 | (Spindel 3) |
| 19 | 62,6 % Wasser | |
| | 3,3 % Dispersion gemäß Beispiel 12 | 1650 |
| | 34,1 % Triethanolamin (100 %) | (Spindel 4) |
| 20 | 62,6 % Wasser | |
| | 34,1 % Triethanolamin (100 %) | 1680 |
| | 3,3 % Dispersion gemäß Beispiel 12 | (Spindel 4) |

## Patentansprüche

1. Wässrige Dispersionen von wasserlöslichen Polymerisaten von ethylenisch ungesättigten anionischen Monomeren erhältlich durch radikalische Polymerisation der Monomeren In wässrigem Medium in Gegenwart mindestens eines Stabilisators, **dadurch gekennzeichnet, dass** man die Polymerisation in Gegenwart mindestens eines wasserlöslichen Polymeren der Gruppen .
(a) Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole und/oder Copolymerisate aus Alkylpolyalkylenglykolmethacrylaten und Methacrylsäure
und mindestens eines wasserlöslichen Polymeren ausgewählt aus
(b) hydrolysierte Copolymerisate aus Vinylalkylethern und Maleinsäureanhydrid in Form der freien Carboxylgruppen und in Form der zumindest partiell mit Alkalimetallhydroxiden oder Ammoniumbasen neutralisierten Salze und/oder einer wasserlöslichen Stärke aus der Gruppe kationisch modifizierter Kartoffelstärke, anionisch modifizierter Kartoffelstärke, abgebauter Kartoffelstärke und Maltodextrin
als Stabilisator durchführt.

2. Wässrige Dispersionen nach Anspruch **1, dadurch gekennzeichnet, dass** man als wasserlösliche Polymere der Gruppe (a) Polyalkylenglykole mit Molmassen Mₙ von 100 bis 100 000, ein- oder beidseitig mit Alkyl-, Carboxyl- oder Aminogruppen endgruppenverschlossene Polyalkylenglykole mit Molmassen Mₙ von 100 bis 100 000 einsetzt.

3. Wäßrige Dispersionen nach einem der Ansprüche 1 oder 2, **dadurch gekennzeichnet, dass** man als wasserlösliche Polymere der Gruppe (b) hydrolysierte Copolymerisate aus Vinylalkylethern und Maleinsäureanhydrid in Form der freien Carboxylgruppen und in Form der zumindest partiell mit Alkalimetallhydroxiden oder Ammoniumbasen neutralisierten Salze und/oder Maltodextrin einsetzt.

4. Wässrige Dispersionen nach einem der Ansprüche 1 bis 3, **dadurch gekennzeichnet, dass** man als wasserlösliche Polymere der Gruppe (b) hydrolysierte Copolymerisate aus Vinylmethylether und Maleinsäureanhydrid in Form der freien Carboxylgruppen und in Form der zumindest partiell mit Natronlauge, Kalltauge oder Ammoniak neutralisierten Salze einsetzt.

5. Wässrige Dispersionen nach einem der Ansprüche 1 bis 4, **dadurch gekennzeichnet, dass** man als wasserlösliche Polymere
(a) Pfropfpolymerisate von Vinylacetat auf Polyethylenglykolen eines Molekulargevwchts M_{N} von 1000 bis 100 000
und
(b) hydrolysierte Copolymerisate aus Vinylmethylether und Maleinsäureanhydrid in Form der freien Carboxylgruppen und in Form der zumindest partiell mit Natronlauge, Kalilauge oder Ammoniak neutralisierten Salze einsetzt.

6. Wässrige Dispersionen nach einem der Ansprüche 1 bis 5, **dadurch gekennzeichnet, dass** man als wasserlösliche Polymere
(a) Copolymerisate aus Alkylpolyalkylenglykolmethacrylalen und Methacrylsäure
und
(b) mindestens ein hydrolysiertes Copolymerisat aus Vinylmethylether und Maleinsäureanhydrid in Form der freien Carboxylgruppen und in Form der zumindest partiell mit Natronlauge, Kalilauge oder Ammoniak neutralisierten Salze einsetzt.

7. Wässrige Dispersionen nach einem der Anspreche 1 bis 6. **dadurch gekennzeichnet, dass** man als anionische Monomere monoethylenisch ungesättigte C₃-bis C₅-Carbonsäuren, Vinylsulfonsäure, Styrolsulfonsäure, Acrylamidomethylpropansutfonsäure, Vinylphosphonsäure und/oder deren Alkalimetall- oder Ammoniumsalze einsetzt.

8. Wässrige Dispersionen nach einem der Ansprüche 1 bis 7, **dadurch gekennzeichnet, dass** man die Polymerisation der anionischen Monomeren in Gegenwart von anderen ethylenisch ungesättigten Monomeren durchführt.

9. Wässrige Dispersionen nach Anspruch 8, **dadurch gekennzeichnet, dass** man die Polymerisation der anionischen Monomeren in Gegenwart mindestens eines Monomeren aus der Gruppe Acrylamid. Methacrylamid, Acrylsäureestern von einwertigen Alkoholen mit 1 bis 4 C-Atomen. Methacrylsäureestern von einwertigen Alkoholen mit 1 bis 2 C-Atomen, Vinylacetat, Vinylpropionat, Dialkylaminoethyl(meth)acrylaten, Dialkylarninopropyl(moth)acrylaten, Diallyldimethylammoniumchlorid, Vinylimidazol und quatemiertem Vinylimidazol durchführt.

10. Wässrige Dispersionen nach einem der Ansprüche 1 bis 7, **dadurch gekennzeichnet, dass** man bei der radikalischen Polymerisation Acrylsäure in Abwesenheit von anderen Monomeren einsetzt.

11. Wässrige Dispersionen nach einem der Ansprüche 1 bis 9, **dadurch gekennzeichnet, dass** die Polymerisation zusätzlich in Gegenwart mindestens eines Vernetzers durchgeführt wird.

12. Wässrige Dispersionen nach Anspruch 11, **dadurch gekennzeichnet, dass** man als VemetzerTriallylamin, Pentaerythrittriallether, Methylenbisacrylamid. N,N'-Divinylethylenhamstoff, vollständig mit Acrylsäure oder Methacrylsäure veresterte zweiwertige Alkohole mit 2 bis 4 C-Atomen, ethoxylierte Trimethylolpropantriacrylate, ethoxylierte Trimethylolpropantrimethacrylate, Pentaerythrittriacrylat, Pentaerythrittetraaaylat und/oder Triallylmethylammoniumchlorid einsetzt.

13. Verfahren zur Herstellung von wässrigen Dispersionen von wasserlöslichen Polymerisaten von ethylenisch ungesättigten anionischen Monomeren durch radi-kalische Polymerisation der Monomeren in wässrigem Medium in Gegenwart mindestens eines Stabilisators, **dadurch gekennzeichnet, dass** man die Polymerisation in Gegenwart mindestens eines wasserlöslichen Polymeren der Gruppen
(a) Pfropfpolymerisate von Vinylacetat und/oder Vinylpropionat auf Polyethylenglykolen, ein- oder beidseitig mit Alkyl-, Carboxyl- oder Aminogruppen endgruppenverschlossene Polyethylenglykole, Copolymerisate aus Alkylpolyalkylenglykolmethacrylaten und Methacrylsäure,
und mindestens eines wasserlöslichen Polymeren ausgewählt aus
(b) hydrolysierte Copolymerisate aus Vinylalkylethern und Maleinsäureanhydrid in Form der freien Carboxylgruppen und In Form der zumindest partiell mit Alkalimetallhydroxiden oder Ammoniumbasen neutralisierten Salze und/oder Maltodextrin
als Stabilisator bei pH-Werten in dem Bereich von 1 bis 13 durchführt.

14. Verwendung der wässrigen Dispersionen nach den Ansprüchen 1 bis 12 als Verdickungsmittel für wässrige Systeme.

15. Verwendung nach Anspruch 14, **dadurch gekennzeichnet, dass** die wässrige Dispersion einem zu verdickenden System im gesamten pH-Wertbereich zugesetzt werden kann.

16. Verwendung nach Anspruch 14 oder 15, **dadurch gekennzeichnet, dass** man die wässrigen Dispersionen als Zusatz zu Papierstreichmassen, als Verdickungsmittel für Pigmentdruckpasten und für wässrige Farben, als Verdickungsmittel für Kosmetikformulierungen und für die Oberflächenbehandlung von Leder einsetzt.

## Claims

1. An aqueous dispersion of water-soluble polymers of ethylenically unsaturated anionic monomers, obtainable by free radical polymerization of the monomers in an aqueous medium in the presence of at least one stabilizer, wherein the polymerization is carried out in the presence of at least one water-soluble polymer from the groups consisting of
(a) graft polymers of vinyl acetate and/or vinyl propionate on polyethylene glycols, polyethylene glycols blocked at one or both terminal groups with alkyl, carboxyl or amino groups and/or
copolymers of alkyl polyalkylene glycol methacrylates and methacrylic acid
and at least one water-soluble polymer selected from
(b) hydrolyzed copolymers of vinyl alkyl ethers and maleic anhydride in the form of the free carboxyl groups and in the form of the salts at least partly neutralized with alkali metal hydroxides or ammonium bases, and/or of water-soluble starch from the group consisting of cationically modified potato starch, anionically modified potato starch, degraded potato starch and maltodextrin,
as a stabilizer.

2. The aqueous dispersion according to claim 1, wherein polyalkylene glycols having molar masses Mₙ of from 100 to 100 000 and polyalkylene glycols blocked at one or both terminal groups with alkyl, carboxyl or amino groups and having molar masses Mₙ of from 100 to 100 000 are used as water-soluble polymers of group (a).

3. The aqueous dispersion according to either of claims 1 and 2, wherein hydrolyzed copolymers of vinyl alkyl ethers and maleic anhydride in the form of the free carboxyl groups and in the form of the salts at least partly neutralized with alkali metal hydroxides or ammonium bases and/or maltodextrin are used as water-soluble polymers of group (b).

4. The aqueous dispersion according to any of claims 1 to 3, wherein hydrolyzed copolymers of vinyl methyl ether and maleic anhydride in the form of the free carboxyl groups and in the form of the salts at least partly neutralized with sodium hydroxide solution, potassium hydroxide solution or ammonia are used as water-soluble polymers of group (b).

5. The aqueous dispersion according to any of claims 1 to 4, wherein
(a) graft polymers of vinyl acetate on polyethylene glycols having a molecular weight Mₙ of from 1000 to 100 000
and
(b) hydrolyzed copolymers of vinyl methyl ether and maleic anhydride in the form of the free carboxyl groups and in the form of the salts at least partly neutralized with sodium hydroxide solution, potassium hydroxide solution or ammonia are used as water-soluble polymers.

6. The aqueous dispersion according to any of claims 1 to 5, wherein
(a) copolymers of alkyl polyalkylene glycol methacrylates and methacrylic acid
and
(b) at least one hydrolyzed copolymer of vinyl methyl ether and maleic anhydride in the form of the free carboxyl groups and in the form of the salts at least partly neutralized with sodium hydroxide solution, potassium hydroxide solution or ammonia are used as water-soluble polymers.

7. The aqueous dispersion according to any of claims 1 to 6, wherein monoethylenically unsaturated C₃- to C₅-carboxylic acids, vinylsulfonic acid, styrenesulfonic acid, acrylamidomethylpropanesulfonic acid, vinylphosphonic acid and/or the alkali metal or ammonium salts thereof are used as anionic monomers.

8. The aqueous dispersion according to any of claims 1 to 7, wherein the polymerization of the anionic monomers is carried out in the presence of other ethylenically unsaturated monomers.

9. The aqueous dispersion according to claim 8, wherein the polymerization of the anionic monomers is carried out in the presence of at least one monomer from the group consisting of acrylamide, methacrylamide, acrylic esters of monohydric alcohols of 1 to 4 carbon atoms, methacrylic esters of monohydric alcohols of 1 or 2 carbon atoms, vinyl acetate, vinyl propionate, dialkylaminoethyl (meth)acrylates, dialkylaminopropyl (meth)acrylates, diallyldimethylammonium chloride, vinylimidazole and quaternized vinylimidazole.

10. The aqueous dispersion according to any of claims 1 to 7, wherein, in the free radical polymerization, acrylic acid is used in the absence of other monomers.

11. The aqueous dispersion according to any of claims 1 to 9, wherein the polymerization is additionally carried out in the presence of at least one crosslinking agent.

12. The aqueous dispersion according to claim 11, wherein triallylamine, pentaerythrityl triallyl ether, methylenebisacrylamide, N,N'-divinylethyleneurea, dihydric alcohols of 2 to 4 carbon atoms which are completely esterified with acrylic acid or methacrylic acid, ethoxylated trimethylolpropane triacrylates, ethoxylated trimethylolpropane trimethacrylates, pentaerythrityl triacrylate, pentaerythrityl tetraacrylate and/or triallylmethylammonium chloride are used as the crosslinking agent.

13. A process for the preparation of aqueous dispersions of water-soluble polymers of ethylenically unsaturated anionic monomers by free radical polymerization of the monomers in an aqueous medium in the presence of at least one stabilizer, wherein the polymerization is carried out in the presence of at least one water-soluble polymer from the groups consisting of
(a) graft polymers of vinyl acetate and/or vinyl propionate on polyethylene glycols, polyethylene glycols blocked at one or both terminal groups with alkyl, carboxyl or amino groups,
copolymers of alkyl polyalkylene glycol methacrylates and methacrylic acid,
and at least one water-soluble polymer selected from
(b) hydrolyzed copolymers of vinyl alkyl ethers and maleic anhydride in the form of the free carboxyl groups and in the form of the salts at least partly neutralized with alkali metal hydroxides or ammonium bases, and/or maltodextrin,
as a stabilizer at a pH of from 1 to 13.

14. The use of an aqueous dispersion according to any of claims 1 to 12 as a thickener for aqueous systems.

15. The use according to claim 14, wherein the aqueous dispersion can be added to a thickening system in the total pH range.

16. The use according to claim 14 or 15, wherein the aqueous dispersion is used as an additive to paper coating slips, as thickeners for pigment print pastes and for water-based surface coatings, as thickeners for cosmetic formulations and for the surface treatment of leather.

## Revendications

1. Dispersions aqueuses de polymères hydrosolubles constitués de monomères anioniques à insaturation éthylénique que l'on peut obtenir par polymérisation radicalaire des monomères dans un milieu aqueux en présence d'au moins un stabilisateur, **caractérisé en ce que** l'on réalise la polymérisation en présence d'au moins un polymère hydrosoluble des groupes suivants :
(a) des polymères de greffage d'acétate de vinyle et/ou de propionate de vinyle sur des polyéthylèneglycols, des polyéthylèneglycols à groupements terminaux bloqués sur un ou les deux côtés par des groupements alkyle, carboxyle ou amino et/ou des copolymères de méthacrylates d'alkylpolyalkylène-glycols et d'acide méthacrylique,
et d'au moins un polymère hydrosoluble choisi parmi
(b) des copolymères hydrolysés de vinylalkyléthers et d'anhydride d'acide maléique sous la forme de groupements carboxyle libres et sous la forme de sels neutralisés au moins partiellement par des hydroxydes de métaux alcalins ou des bases d'ammonium, et/ou d'un amidon hydrosoluble du groupe de l'amidon de pommes de terre modifié par voie cationique, de l'amidon de pommes de terre modifié par voie anionique, de l'amidon de pommes de terre dégradé et de la maltodextrine comme stabilisateur.

2. Dispersions aqueuses selon la revendication 1, **caractérisées en ce que** l'on utilise comme polymères hydrosolubles du groupe (a) des polyalkylèneglycols avec des masses molaires Mₙ de 100 à 100.000, des polyalkylèneglycols à groupements terminaux bloqués sur un ou les deux côtés par des groupements alkyle, carboxyle ou amino avec des masses molaires Mₙ de 100 à 100.000.

3. Dispersions aqueuses selon l'une quelconque des revendications 1 ou 2, **caractérisées en ce que** l'on utilise comme polymères hydrosolubles du groupe (b) des copolymères hydrolysés de vinylalkyléthers et d'anhydride d'acide maléique sous la forme de groupements carboxyle libres et sous la forme de sels neutralisés au moins partiellement par des hydroxydes de métaux alcalins ou des bases d'ammonium et/ou de la maltodextrine.

4. Dispersions aqueuses selon l'une quelconque des revendications 1 à 3, **caractérisées en ce que** l'on utilise comme polymères hydrosolubles du groupe (b) des copolymères hydrolysés de vinylméthyléther et d'anhydride d'acide maléique sous la forme de groupements carboxyle libres et sous la forme de sels au moins partiellement neutralisés par de la lessive de soude, de la lessive de potasse ou de l'ammoniac.

5. Dispersions aqueuses selon l'une quelconque des revendications 1 à 4, **caractérisées en ce que** l'on utilise comme polymères hydrosolubles
(a) des polymères de greffage d'acétate de vinyle sur des polyéthylèneglycols d'un poids moléculaire Mₙ de 1000 à 100.000
et (b) des copolymères hydrolysés de vinylméthyléther et d'anhydride d'acide maléique sous la forme de groupements carboxyle libres et sous la forme de sels au moins partiellement neutralisés par de la lessive de soude, de la lessive de potasse ou de l'ammoniac.

6. Dispersions aqueuses selon l'une quelconque des revendications 1 à 5, **caractérisées en ce que** l'on utilise comme polymères hydrosolubles
(a) des copolymères de méthacrylates d'alkylpolyalkylèneglycols et d'acide méthacrylique et
(b) au moins un copolymère hydrolysé de vinylméthyléther et d'anhydride d'acide maléique sous la forme de groupements carboxyle libres et sous la forme de sels au moins partiellement neutralisés par de la lessive de soude, de la lessive de potasse ou de l'ammoniac.

7. Dispersions aqueuses selon l'une quelconque des revendications 1 à 6, **caractérisées en ce que** l'on utilise comme monomères anioniques des acides carboxyliques en C₃-C₅ à insaturation monoéthylénique, l'acide vinylsulfonique, l'acide styrènesulfonique, l'acide acrylamidométhylpropanesulfonique, l'acide vinylphosphonique et/ou leurs sels avec des métaux alcalins ou de l'ammonium.

8. Dispersions aqueuses selon l'une quelconque des revendications 1 à 7, **caractérisées en ce que** l'on réalise la polymérisation des monomères anioniques en présence d'autres monomères à insaturation éthylénique.

9. Dispersions aqueuses selon la revendication 8, **caractérisées en ce que** l'on réalise la polymérisation des monomères anioniques en présence d'au moins un monomère choisi dans le groupe de l'acrylamide, du méthacrylamide, des esters d'acide acrylique d'alcools monovalents ayant 1 à 4 atomes de carbone, des esters d'acide méthacrylique d'alcools monovalents avec 1 à 2 atomes de carbone, de l'acétate de vinyle, du propionate de vinyle, des (méth)acrylates de dialkylaminoéthyle, des (méth)acrylates de dialkylaminopropyle, du chlorure de diallyldiméthylammonium, du vinylimidazole et du vinylimidazole quaternisé.

10. Dispersions aqueuses selon l'une quelconque des revendications 1 à 7, **caractérisées en ce que** l'on utilise de l'acide acrylique lors de la polymérisation radicalaire en l'absence d'autres monomères.

11. Dispersions aqueuses selon l'une quelconque des revendications 1 à 9, **caractérisées en ce que** la polymérisation est réalisée en plus en présence d'au moins un agent de réticulation.

12. Dispersions aqueuses selon la revendication 11, **caractérisées en ce que** l'on utilise comme agent de réticulation la triallylamine, le triallyléther de pentaérythritol, le méthylène-bisacrylamide, la N,N-divinyléthylèneurée, des alcools divalents complètement estérifiés avec de l'acide acrylique ou de l'acide méthacrylique, ayant 2 à 4 atomes de carbone, des triacrylates de triméthylolpropane éthoxylés, des triméthacrylates de triméthylolpropane éthoxylés, le triacrylate de pentaérythritol, le tétraacrylate de pentaérythritol et/ou le chlorure de triallylméthylammonium.

13. Procédé de fabrication de dispersions aqueuses de polymères hydrosolubles de monomères anioniques à insaturation éthylénique par polymérisation radicalaire des monomères dans un milieu aqueux en présence d'au moins un stabilisateur, **caractérisé en ce que** l'on réalise la polymérisation en présence d'au moins un polymère hydrosoluble des groupes suivants :
(a) des polymères de greffage d'acétate de vinyle et/ou de propionate de vinyle sur des polyéthylèneglycols, des polyéthylèneglycols à groupements terminaux bloqués sur un ou sur les deux côtés par des groupements alkyle, carboxyle ou amino, des copolymères de méthacrylates d'alkylpolyalkylèneglycols et d'acide méthacrylique,
et au moins un polymère hydrosoluble choisi parmi
(b) des copolymères hydrolysés de vinylalkyléthers et d'anhydride d'acide maléique sous la forme de groupements carboxyle libres et sous la forme de sels neutralisés au moins partiellement par des hydroxydes de métaux alcalins ou des bases d'ammonium et/ou de la maltodextrine
comme stabilisateur à des valeurs de pH dans la plage de 1 à 13.

14. Utilisation des dispersions aqueuses selon les revendications 1 à 12 comme agent épaississant pour systèmes aqueux.

15. Utilisation selon la revendication 14, **caractérisée en ce que** la dispersion aqueuse peut être ajoutée à un système à épaissir dans toute la plage de valeurs de pH.

16. Utilisation selon la revendication 14 ou 15, **caractérisée en ce que** l'on utilise les dispersions aqueuses comme additif pour les sauces de couchage de papier, comme agent épaississant pour les pâtes d'impression pigmentaires et les peintures aqueuses, comme agent épaississant pour les formulations cosmétiques et pour le traitement en surface du cuir.
